# EUROPEAN PATENT APPLICATION

(11) **EP 4 503 552 A1**
(43) Date of publication of application: **05.02.2025**
(21) Application number: 23869898.9
(22) Date of filing: 10.07.2023
(51) Int. Cl.: H04L 43/0852

(54) **DATA TRANSMISSION CONTROL METHOD AND APPARATUS, COMPUTER READABLE MEDIUM, AND ELECTRONIC DEVICE**

(30) Priority: 28.09.2022 CN 202211192942
(71) Applicant: Tencent Technology (Shenzhen) Company Limited, Shenzhen, Guangdong 518057 (CN)
(72) Inventor: LEI, Yixue, Shenzhen, Guangdong 518057 (CN)
(74) Representative: Gunzelmann, Rainer
(86) International application number: PCT/CN2023/106487
(87) International publication number: WO 2024/066651

(57) **Abstract**

Embodiments of this application provide a data transmission control method and apparatus, a computer readable medium, and an electronic device. The data transmission control method comprises: receiving a delay jitter distribution characteristic of a service data packet sent by an application function entity, the delay jitter distribution characteristic being used for representing a transmission delay range of the service data packet; detecting a network transmission characteristic between an application server and a core network gateway; according to the network transmission characteristic, adjusting the delay jitter distribution characteristic of the service data packet to obtain an adjusted delay jitter distribution characteristic; and performing data transmission control according to the adjusted delay jitter distribution characteristic.

## Description

### RELATED APPLICATION

This application claims priority to Chinese Patent Application No. 202211192942.5, entitled "DATA TRANSMISSION CONTROL METHOD AND APPARATUS, COMPUTER-READABLE MEDIUM, AND ELECTRONIC DEVICE" filed with China National Intellectual Property Administration (CNIPA) on September 28, 2022, which is incorporated herein by reference in its entirety.

### FIELD OF THE TECHNOLOGY

This application relates to the field of computer and communication technologies, and specifically, to a data transmission control method and apparatus, a computer-readable medium, and an electronic device.

### BACKGROUND OF THE DISCLOSURE

In the fifth-generation mobile communication technology (5G) and evolved 5G systems (5GSs), high-bandwidth interactive services are important types of services, such as cloud gaming, virtual reality (VR), augmented reality (AR), mixed reality (MR), extended reality (XR), and cinematic reality (CR).

These high-bandwidth interactive services not only have high requirements on timeliness of transmission, but also have placed a huge load on network transmission as the amount of data generated at an application layer grows tremendously with the increase in indicators such as resolution and frame rate. In addition, this type of services depend greatly on the performance of network transmission, and any minor changes in the network may affect the actual effect of this type of services. Therefore, how to ensure the transmission quality of service data packets is a technical problem that needs to be resolved urgently.

### SUMMARY

Embodiments of this application provide a data transmission control method and apparatus, a computer-readable medium, and an electronic device, for which an impact of network transmission characteristics between an application server (AS) and a core network gateway on latency jitter distribution characteristics of a service data packet may be considered. This improves scheduling accuracy for a service data packet transmission process and transmission quality of the service data packet.

Other features and advantages of this application become clear through the following detailed descriptions or partially learned through the practice of this application.

An embodiment of this application provides a data transmission control method, performed by a core network gateway, and including: receiving latency jitter distribution characteristics of a service data packet that are transmitted by an application function (AF), the latency jitter distribution characteristics representing a transmission latency range of the service data packet; detecting network transmission characteristics between an AS and a core network gateway; adjusting the latency jitter distribution characteristics of the service data packet according to the network transmission characteristics to obtain adjusted latency jitter distribution characteristics; and performing data transmission control according to the adjusted latency jitter distribution characteristics.

An embodiment of this application provides a data transmission control method, performed by an AF, and including: obtaining latency jitter distribution characteristics of a service data packet, the latency jitter distribution characteristics representing a transmission latency range of the service data packet; and transmitting the latency jitter distribution characteristics to a core network gateway, so that the core network gateway adjusts the latency jitter distribution characteristics of the service data packet according to network transmission characteristics between an AS and the core network gateway and performs data transmission control based on adjusted latency jitter distribution characteristics.

An embodiment of this application provides a data transmission control method, performed by a core network's network element, and including: receiving adjusted latency jitter distribution characteristics for a service data packet and from a core network gateway, the adjusted latency jitter distribution characteristics being obtained by the core network gateway by adjusting latency jitter distribution characteristics of the service data packet according to network transmission characteristics between an AS and the core network gateway; obtaining network transmission characteristics between the core network gateway and an access network's network element; and re-adjusting the latency jitter distribution characteristics from the core network gateway according to the network transmission characteristics between the core network gateway and the access network's network element; and performing data transmission control on the access network's network element based on re-adjusted latency jitter distribution characteristics.

An embodiment of this application provides a data transmission control apparatus, including: a receiving unit, configured to receive latency jitter distribution characteristics of a service data packet that are transmitted by an AF, the latency jitter distribution characteristics representing a transmission latency range of the service data packet; a detection unit, configured to detect network transmission characteristics between an AS and a core network gateway; an adjustment unit, configured to adjust the latency jitter distribution characteristics of the service data packet according to the network transmission characteristics to obtain adjusted latency jitter distribution characteristics; and a processing unit, configured to perform data transmission control according to the adjusted latency jitter distribution characteristics.

An embodiment of this application provides a data transmission control apparatus, including: an obtaining unit, configured to obtain latency jitter distribution characteristics of a service data packet, the latency jitter distribution characteristics representing a transmission latency range of the service data packet; and a sending unit, configured to transmit the latency jitter distribution characteristics to a core network gateway, so that the core network gateway adjusts the latency jitter distribution characteristics of the service data packet according to network transmission characteristics between an AS and the core network gateway and performs data transmission control according to adjusted latency jitter distribution characteristics.

An embodiment of this application provides a data transmission control apparatus, including: a receiving unit, configured to receive adjusted latency jitter distribution characteristics for a service data packet and from a core network gateway, the adjusted latency jitter distribution characteristics being obtained by the core network gateway by adjusting latency jitter distribution characteristics of the service data packet according to network transmission characteristics between an AS and the core network gateway; an obtaining unit, configured to obtain network transmission characteristics between the core network gateway and an access network's network element; an adjustment unit, configured to re-adjust the latency jitter distribution characteristics from the core network gateway according to the network transmission characteristics between the core network gateway and the access network's network element; and a control unit, configured to perform data transmission control on the access network's network element based on re-adjusted latency jitter distribution characteristics.

An embodiment of this application provides a computer-readable medium, having a computer program stored therein, the computer program, when executed by a processor, implementing the data transmission control method described in the foregoing embodiment.

An embodiment of this application provides an electronic device, including: one or more processors; and a storage apparatus, configured to store one or more computer programs, the one or more computer programs, when executed by the one or more processors, causing the electronic device to implement the data transmission control method described in the foregoing embodiment.

An embodiment of this application provides a computer program product, including a computer program, the computer program being stored in a computer-readable storage medium. A processor of an electronic device reads, from the computer-readable storage medium, and executes the computer program, to cause the electronic device to perform the data transmission control method provided in the foregoing various embodiments.

In technical solutions provided in some embodiments of this application, latency jitter distribution characteristics of a service data packet are adjusted according to network transmission characteristics between an AS and a core network gateway, and then, data transmission control is performed according to adjusted latency jitter distribution characteristics. In this way, an impact of the network transmission characteristics between the AS and the core network gateway on the latency jitter distribution characteristics of the service data packet can be considered. Therefore, the adjusted latency jitter distribution characteristics can be adapted to an actual transmission process of the service data packet. This avoids deviations of a configured data transmission control policy caused by the impact of the network transmission characteristics, and improves scheduling accuracy for the transmission process of the service data packet and transmission quality of the service data packet, thereby helping improve the experience brought by services.

The foregoing general descriptions and the following detailed descriptions are merely for illustration and explanation purposes and are not intended to limit this application.

### BRIEF DESCRIPTION OF THE DRAWINGS

FIG. 1 is a schematic diagram of an exemplary system architecture to which a technical solution of an embodiment of this application is applicable.
FIG. 2 is a schematic diagram of a multimedia data packet transmission process according to some embodiments of this application.
FIG. 3 is a schematic diagram of a system architecture of a data transmission control method according to some embodiments of this application.
FIG. 4 is a schematic diagram of latency jitter distribution comparison of a service data packet transmission process according to some embodiments of this application.
FIG. 5 is a flowchart of a data transmission control method according to some embodiments of this application.
FIG. 6 is a flowchart of a data transmission control method according to some embodiments of this application.
FIG. 7 is a flowchart of a data transmission control method according to some embodiments of this application.
FIG. 8 is a flowchart of a data transmission control method according to some embodiments of this application.
FIG. 9 is an interaction flowchart of a data transmission control method according to some embodiments of this application.
FIG. 10 is a block diagram of a data transmission control apparatus according to some embodiments of this application.
FIG. 11 is a block diagram of a data transmission control apparatus according to some embodiments of this application.
FIG. 12 is a block diagram of a data transmission control apparatus according to some embodiments of this application.
FIG. 13 is a schematic structural diagram of a computer system adapted to implement an electronic device according to an embodiment of this application.

### DESCRIPTION OF EMBODIMENTS

Examples of implementations are described more comprehensively with reference to the accompanying drawings. However, the examples of the implementations can be implemented in various forms, and the implementations are not to be understood as being limited to these examples. On the contrary, these implementations are provided to make this application more comprehensive and complete, and comprehensively convey the idea of the examples of the implementations to a person skilled in the art.

In addition, the features, structures, or characteristics described in this application may be combined in one or more embodiments in any appropriate manner. In the following descriptions, many specific details are provided to give a comprehensive understanding of the embodiments of this application. However, a person of ordinary skill in the art is to be aware that, the technical solutions in this application may be implemented without all detailed features in the embodiments, or with one or more particular details omitted, or with other methods, components, apparatuses, blocks, or the like used.

The block diagrams shown in the accompanying drawings are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

The flowcharts shown in the accompanying drawings are only exemplary illustrations, and it is not mandatory to include all content and operations/blocks, or to perform the operations/blocks in the order described. For example, some operations/blocks may be further divided, while some operations/blocks may be combined or partially combined. Therefore, an actual execution order may change according to an actual case.

"A plurality of" mentioned in this specification means two or more. The term "and/or describes an association relationship between associated objects and represents that three types of relationships may exist. For example, A and/or B may represent the following three cases: only A exists, both A and B exist, and only B exists. The character "/" generally indicates an "or" relationship between the associated objects.

The development of 5G allows many multimedia services requiring large amounts of data and short latencies to be applied, such as cloud gaming services, VR, AR, MR, XR, CR, and other interactive services.

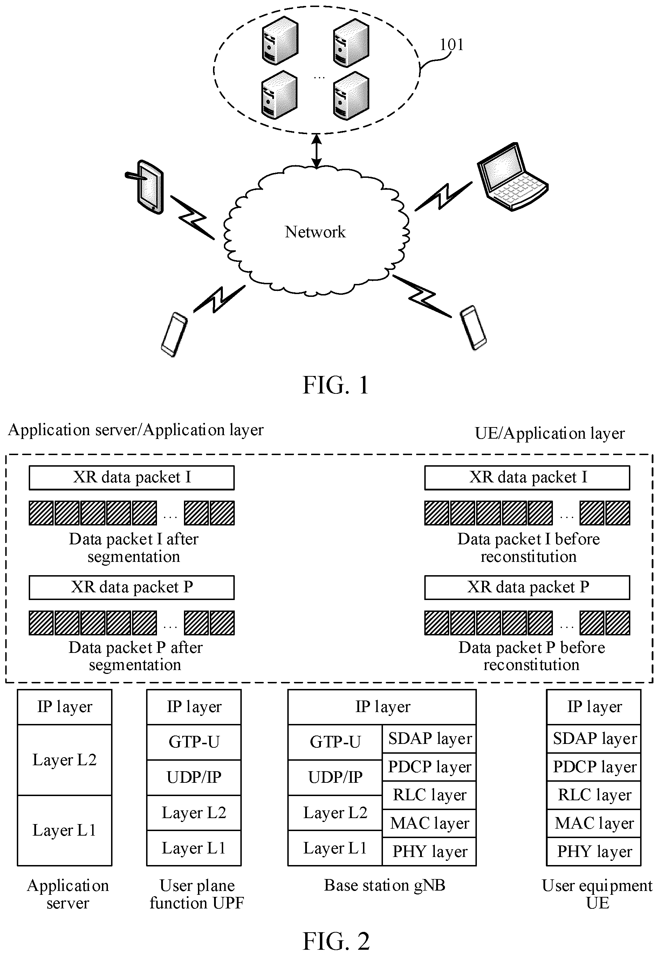

For example, in a cloud gaming scene shown in FIG. 1, a cloud server 101 is configured to run a cloud game. The cloud server 101 may render a game screen, perform encoding processing on an audio signal and a rendered image, and finally transmit encoded data obtained through the encoding processing to each game client through a network. The game client may be user equipment (UE) with basic streaming media playback capability, human-computer interaction capability, communication capability, and the like, such as a smartphone, a tablet computer, a notebook computer, a desktop computer, a smart television, a smart household, an in-vehicle terminal, or an aerial vehicle. Alternatively, the game client may be an application running in a terminal device. Specifically, the game client may decode the encoded data transmitted by the cloud server 101 to obtain an analog audio/video signal and play the signal.

FIG. 1 shows merely an example of a system architecture of a cloud gaming system, and does not limit the specific architecture of the cloud gaming system. For example, in other embodiments, the cloud gaming system may further include a backend server for scheduling, and the like. In addition, the cloud server 101 may be an independent physical server, or may be a server cluster or a distributed system including a plurality of physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and big data and artificial intelligence (AI) platforms. The game client and the cloud server 101 may be directly or indirectly connected in a wired or wireless communication manner. This is not limited herein in this application.

In the foregoing multimedia-based interactive service application scenario, a multimedia data packet is huge, and therefore needs to be split into a plurality of data packets for transmission. Specifically, as shown in FIG. 2, in a 5GS, a user plane mainly includes an AS, a user plane function (UPF), a next generation nodeB (gNB), and UE. For some typical service scenarios, the multimedia data packet is mainly transmitted in a downward direction, for example, from the AS to the UPF, and then, transmitted to the UE through the gNB. During transmission, the multimedia data packet (in FIG. 2, an XR data packet is used as an example) is split in an application layer of the AS. After the split data packet reaches the UPF from the AS as an IP packet, the 5GS transmits data subpackets to a UE end through a protocol data unit (PDU). At the UE end, the data subpackets are submitted level by level upward from a protocol stack and reconstituted to recover the multimedia data packet.

In the system shown in FIG. 2, a layer L1 refers to a physical layer that is configured for ensuring that original data can be transmitted over various physical media. A layer L2 refers to a data link layer. The data link layer provides a service for a network layer based on a service provided by the physical layer. An Internet Protocol (IP) layer is the network layer, configured for implementing data transmission between systems at two ends. UDP is the User Datagram Protocol. GTP-U is the general packet radio service (GPRS) Tunneling Protocol-user plane. PHY is the abbreviation of Physical, representing the physical layer. MAC is Media Access Control. RLC is Radio Link Control, representing the radio link control layer protocol. PDCP is the Packet Data Convergence Protocol. SDAP is the Service Data Adaptation Protocol.

As described above, for multimedia services, such as XR and Media (XRM) services, it is common to divide a frame of multimedia data packet into a plurality of data packets for transmission. A data packet formed by a single multimedia service frame or a group of packets (GoP) may be relatively large in bytes, and need to be carried by a series of IP data packets. There is a particular correlation between these IP data packets. Processing these packets according to the correlation can effectively save wireless network bandwidth. Some XRM service streams are periodic, and may be, for example, data packets at 60/90/120 frames per second (FPS), and data packets are roughly generated at intervals of roughly 16.67 ms/11.11 ms/8.33 ms for a generated video frame. In use of these periodic features, a wireless network can improve time-frequency resource efficiency. For example, according to the periodicity of the XRM services, a semipersistent scheduling (SPS) or connected-discontinuous reception (C-DRX) mechanism is used. However, this method can be used only when the 5GS has learned that the XRM service stream is periodic.

In some embodiments, an application function (AF)/AS may directly provide periodic information and latency jitter distribution characteristics of a service stream for the 5GS. However, when the resolution of the XR service increases, one video frame may be segmented into a plurality of IP data packets for transmission. In addition, after the IP data packets obtained through segmentation is transmitted between a third-party server and a 5GS gateway, their periodicity and latency jitter distribution characteristics may be affected. Therefore, when the data packet reaches a base station for wireless network scheduling and transmission, the periodicity and latency jitter distribution characteristics have changed, leading to a deviation in C-DRX configuration at the base station side.

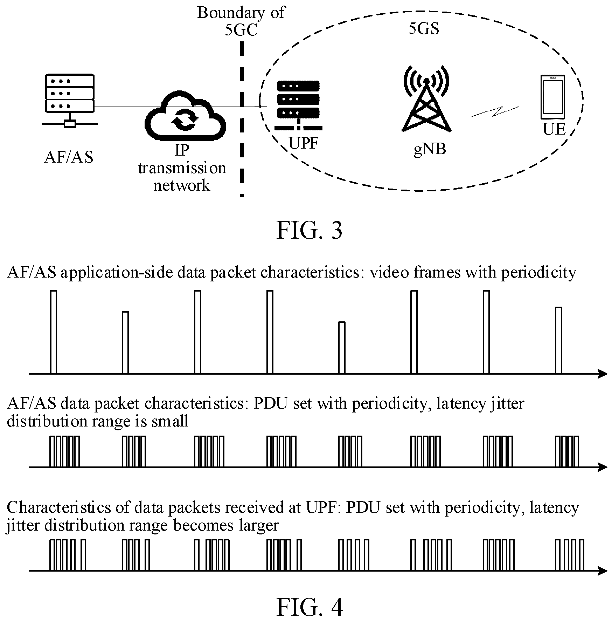

Specifically, as shown in FIG. 3, the AF/AS may implement a control plane function of a third-party AS, to achieve interaction through an AF-network exposure function (NEF)-policy control function (PCF) or an AF-PCF manner. The AF/AS entity may also implement a user plane function of the third-party AS, that is, AS-IP transmission network-UPF interface. FIG. 3 shows a boundary of the 5GS, that is, a deployment location of the 5GS gateway. The 5GS gateway may be a UPF entity, or may be a control plane entity responsible for capability exposure, such as an NEF or a PCF, or a router/switch node deployed between the 5GS and an external network.

In the embodiments of this application, the IP transmission network may be implemented in a wired or wireless manner, such as a metropolitan area network, an access network, or a wide area network based on an optical network, depending on a topological relationship between a boundary of a 5G core (5GC) and the third-party AS. Because a network architecture that facilitates UPF sinking is used for a 5G network, if the AF/AS is located at an edge, the UPF is also sunk to the edge location. This can shorten a topological distance between the boundary of the 5GC (that is, the UPF at the edge location) and the AF/AS. However, the AF/AS may alternatively be located in a center cloud. In this case, the sinking of the UPF cannot resolve this problem. Therefore, the impact of the IP transmission network between the third-party server and the boundary of the 5GC, that is, the UPF, on the transmission of the service stream cannot be ignored.

Specifically, as shown in FIG. 4, features of an AF/AS application-side data packet may be, for example, a video frame with periodicity, which, during transmission, is segmented into a plurality of IP data packets for transmission. The plurality of IP data packets may constitute a PDU set. In this case, a latency jitter distribution range of the IP data packets is relatively small. Because these IP data packets need to be transmitted between the third-party server AS and the 5GS gateway, when the IP data packets arrive at the UPF, the latency jitter distribution range of these IP data packets becomes larger. As shown in FIG. 4, a latency between IP data packets within a PDU set becomes larger, resulting in a longer reception time of the PDU set.

Therefore, in some embodiments of this application, the UPF may proactively detect an IP transmission network feature between the AF/AS and the UPF, and analyze the impact of the transmission network feature on periodic information and latency jitter distribution characteristics. In this way, after the periodic information and the latency jitter distribution characteristics provided by the AF/AS are received, with reference to the IP transmission network feature between the AF/AS and the UPF, the periodic information and the latency jitter distribution characteristics of a service data packet can be adjusted and then configured for a base station. Then, the base station may perform XR data packet processing according to adjusted periodic information and latency jitter distribution characteristics, including but not limited to, C-DRX configuration and SPS scheduling for a radio access network (RAN).

After adjusting the latency jitter distribution characteristics, the UPF may configure the adjusted latency jitter distribution characteristics for the base station through a core network's network element. For example, the UPF may configure the adjusted latency jitter distribution characteristics for the base station through an SMF. Alternatively, the PCF may subscribe to a network analytics service from a network data analytics function (NWDAF). The service is configured for collecting the latency jitter distribution characteristics adjusted by the UPF. Then, the PCF may obtain the adjusted latency jitter distribution characteristics from the NWDAF. Subsequently, the PCF configures the adjusted latency jitter distribution characteristics for the base station through an SMF and/or an AMF.

In some embodiments, during the adjustment of the periodic information and the latency jitter distribution characteristics of the service data packet, an impact way of the IP transmission network feature between the AF/AS and the UPF on the periodicity and the latency jitter distribution characteristics of the service data packet can be inferred by using an AI method. In this way, the periodic information and the latency jitter distribution characteristics of the service data packet are adjusted.

AI involves a theory, a method, a technology, and an application system that use a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

The AI technology is a comprehensive discipline, and relates to a wide range of fields including both hardware-level technologies and software-level technologies. The basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, machine learning (ML)/deep learning (DL), automated driving, and intelligent transportation.

In the embodiments of this application, the UPF specifically can infer the impact way of the IP transmission network feature between the AF/AS and the UPF on the periodicity and the latency jitter distribution characteristics of the service data packet by using an ML method. ML is a multi-field interdiscipline, and relates to a plurality of disciplines such as the probability theory, statistics, the approximation theory, convex analysis, and the algorithm complexity theory. ML specializes in studying how a computer simulates or implements a human learning behavior to obtain new knowledge or skills, and reorganize an existing knowledge structure, so as to keep improving its performance. ML is the core of AI, is a basic way to make the computer intelligent, and is applied to various fields of AI. ML and DL generally include technologies such as an artificial neural network, a belief network, reinforcement learning, transmission learning, inductive learning, and learning from demonstrations.

The implementation details of the technical solutions of the embodiments of this application are described in detail below.

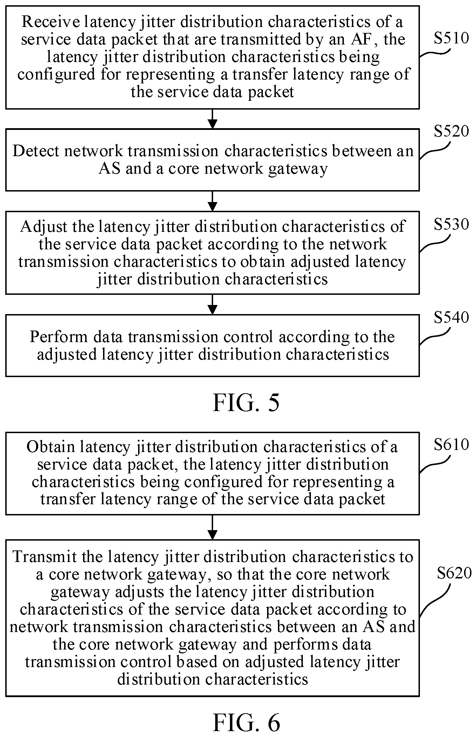

FIG. 5 is a flowchart of a data transmission control method according to some embodiments of this application. The data transmission control method may be performed by a core network gateway, such as a UPF or a PCF. Referring to FIG. 5, the data transmission control method may include S510 to S540. A detailed description is as follows:

S510: Receive latency jitter distribution characteristics of a service data packet that are transmitted by an AF, the latency jitter distribution characteristics being configured for representing a transmission latency range of the service data packet.

In some embodiments, the service data packet may be a periodic service data packet. The periodic information of the periodic service data packet may be determined according to at least one of the following factors: a codec method for the service data packet, transmission parameters of a multimedia service stream corresponding to the service data packet, push parameters of the AS for the multimedia service stream, and pull parameters of the AS for the multimedia service stream.

In some embodiments, the codec method of the service data packet may be, for example, one of advanced video coding (AVC), high efficiency video coding (HEVC), versatile video coding (VVC), and the like. During specific implementation, the periodic information of the service data packet may be determined according to the codec method of the service data packet.

In some embodiments, the transmission parameters of the multimedia service stream corresponding to the service data packet may include service data content contained in the service data packet, such as one or more of audio, a video, and haptic information. During specific implementation, the periodic information of the service data packet may be determined according to the service data content (such as periodic audio information) contained in the service data packet.

In some embodiments, the push parameters of the AS for the multimedia service stream may be a push frame rate (such as a fixed frame rate or a variable frame rate). The pull parameters of the AS for the multimedia service stream may be a pull frame rate (the pull frame rate may alternatively be a fixed frame rate or a variable frame rate).

In some embodiments, the latency jitter distribution characteristics include a maximum latency jitter value and a minimum latency jitter value. For example, the latency jitter distribution characteristics may be a latency jitter distribution interval including the maximum latency jitter value and the minimum latency jitter value, or may be a plurality of discrete latency jitter values including the maximum latency jitter value and the minimum latency jitter value.

In some embodiments, the AF may obtain a network transmission status of the service data packet obtained through statistics collection by the AS, and then determine the maximum latency jitter value and the minimum latency jitter value according to the network transmission status of the service data packet. In some embodiments, the network transmission status of the service data packet obtained through statistics collection by the AS may be obtained from a network interface between the AS and a transmission network.

S520: Detect network transmission characteristics between an AS and the core network gateway.

In some embodiments, the core network gateway is a border device of a core network and may be, for example, a UPF.

In some embodiments, the process of detecting the network transmission characteristics between the AS and the core network gateway may be dynamically detecting a transmission link between the AS and the core network gateway; and then determining transmission bandwidth and latency changes of the transmission link according to a dynamic detection result for the transmission link. The transmission bandwidth and latency changes are the network transmission characteristics between the AS and the core network gateway. In some embodiments, a specific detection process may be performed by a UPF.

In some embodiments, the process of detecting the network transmission characteristics between the AS and the core network gateway may be determining the network transmission characteristics between the AS and the core network gateway according to a service level agreement (SLA) between the AS and the core network. In the technical solution of this embodiment, when there is an SLA for a transmission link between the AF/AS and the core network, the network transmission characteristics between the AS and the core network gateway can be directly determined based on the SLA.

In some embodiments, before the determining the network transmission characteristics between the AS and the core network gateway according to the SLA between the AS and the core network, it may be evaluated first according to the SLA between the AS and the core network, whether the SLA has an impact on the latency jitter distribution characteristics of the service data packet. If the SLA has an impact on the latency jitter distribution characteristics of the service data packet, the network transmission characteristics between the AS and the core network gateway are determined according to the SLA between the AS and the core network. If the SLA has no impact on the latency jitter distribution characteristics of the service data packet, the transmission link between the AS and the core network gateway may be dynamically detected, and then the network transmission characteristics between the AS and the core network gateway are determined according to a dynamic detection result for the transmission link.

In some embodiments, the process of detecting the network transmission characteristics between the AS and the core network gateway may be: dynamically detecting a transmission link between the AS and the core network gateway according to an SLA between the AS and a core network to obtain transmission bandwidth and latency changes of the transmission link. In this embodiment, although a service level between the AS and the core network is agreed on in the SLA, an actual network status may be better than the agreement in the SLA. In this case, the SLA may be used as a reference to implement more targeted detection of network transmission characteristics according to the SLA to improve the accuracy of the detection of the network transmission characteristics.

S530: Adjust the latency jitter distribution characteristics of the service data packet according to the network transmission characteristics to obtain adjusted latency jitter distribution characteristics.

In some embodiments, the process of adjusting the latency jitter distribution characteristics of the service data packet according to the network transmission characteristics in S530 may be: obtaining an impact way of the network transmission characteristics on the latency jitter distribution characteristics of the service data packet, and then adjusting the latency jitter distribution characteristics of the service data packet based on the impact way. In some embodiments, the impact way may be obtained by continuously detecting an impact status of the network transmission characteristics between the AS and the core network gateway on the latency jitter distribution characteristics, and then obtaining a corresponding changing rule (that is, the impact way) through an ML algorithm.

In some embodiments, the adjusting the latency jitter distribution characteristics of the service data packet based on the obtained impact way may include at least one of the following: increasing values of the latency jitter distribution characteristics of the service data packet by a set value, increasing values of the latency jitter distribution characteristics of the service data packet by a set order of magnitude, or increasing values of the latency jitter distribution characteristics of the service data packet by a set multiplier.

In some embodiments, the increasing values of the latency jitter distribution characteristics of the service data packet by a set value may be, for example, adjusting the latency jitter distribution characteristics [-0.05, 0.05] to [-0.07, 0.07], that is, increasing the values of the latency jitter distribution characteristics by 0.02. The increasing values of the latency jitter distribution characteristics of the service data packet by a set order of magnitude may be, for example, adjusting the latency jitter distribution characteristics [-0.05, 0.05] to [-0.5, 0.5], that is, increasing the latency jitter distribution characteristics by one order of magnitude. The increasing values of the latency jitter distribution characteristics of the service data packet by a set multiplier may be, for example, adjusting the latency jitter distribution characteristics [-0.05, 0.05] to [-0.1, 0.1], that is, increasing the latency jitter distribution characteristics by a multiplier of 2.

S540: Perform data transmission control according to the adjusted latency jitter distribution characteristics.

In some embodiments, a core network's network element (for example, the UPF) may send the adjusted latency jitter distribution characteristics to an access network's network element (for example, a gNB). Then, the access network's element performs C-DRX configuration, SPS scheduling, and the like. After adjusting the latency jitter distribution characteristics, the UPF may configure the adjusted latency jitter distribution characteristics for the base station through the core network's network element. For example, the UPF may configure the adjusted latency jitter distribution characteristics for the base station through an SMF. Alternatively, the PCF may subscribe to a network analytics service from an NWDAF. The service is configured for collecting the latency jitter distribution characteristics adjusted by the UPF. Then, the PCF may obtain the adjusted latency jitter distribution characteristics from the NWDAF. Subsequently, the PCF configures the adjusted latency jitter distribution characteristics for the base station through an SMF and/or an AMF.

In the technical solution of the embodiment shown in FIG. 5, the impact of the network transmission characteristics between the AS and the core network gateway on the latency jitter distribution characteristics of the service data packet can be considered. Therefore, the adjusted latency jitter distribution characteristics can be adapted to an actual transmission process of the service data packet. This avoids deviations of a configured data transmission control policy caused by the impact of the network transmission characteristics, and improves scheduling accuracy for the transmission process of the service data packet and transmission quality of the service data packet, thereby helping improve the experience brought by services.

In the technical solution of the embodiment shown in FIG. 5, the latency jitter distribution characteristics of the service data packet are adjusted through the network transmission characteristics between the AS and the core network gateway. In other embodiments of this application, in the transmission process of the service data packet, the periodic information of the service data packet may change due to the network transmission characteristics or a data packet transmission policy. In this case, the periodic information of the service data packet may alternatively be adjusted according to the network transmission characteristics between the AS and the core network gateway, and then data transmission control is performed according to adjusted periodic information.

In some embodiments of this application, alternatively, both the periodic information and the latency jitter distribution characteristics of the service data packet may be adjusted according to the network transmission characteristics between the AS and the core network gateway, and then data transmission control is performed according to adjusted periodic information and adjusted latency jitter distribution characteristics.

FIG. 6 is a flowchart of a data transmission control method according to some embodiments of this application. The data transmission control method may be performed by an AF. Referring to FIG. 6, the data transmission control method may include S610 and S620. A detailed description is as follows:

S610: Obtain latency jitter distribution characteristics of a service data packet, the latency jitter distribution characteristics being configured for representing a transmission latency range of the service data packet.

In some embodiments, the latency jitter distribution characteristics include a maximum latency jitter value and a minimum latency jitter value. For example, the latency jitter distribution characteristics may be a latency jitter distribution interval including the maximum latency jitter value and the minimum latency jitter value, or may be a plurality of discrete latency jitter values including the maximum latency jitter value and the minimum latency jitter value.

In some embodiments, the AF may obtain a network transmission status of the service data packet obtained through statistics collection by the AS, and then determine the maximum latency jitter value and the minimum latency jitter value according to the network transmission status of the service data packet. In some embodiments, the network transmission status of the service data packet obtained through statistics collection by the AS may be obtained from a network interface between the AS and a transmission network.

S620: Transmit the latency jitter distribution characteristics to a core network gateway, so that the core network gateway adjusts the latency jitter distribution characteristics of the service data packet according to network transmission characteristics between an AS and the core network gateway and performs data transmission control based on adjusted latency jitter distribution characteristics.

In some embodiments, for the process in which the core network gateway adjusts the latency jitter distribution characteristics of the service data packet according to the network transmission characteristics between the AS and the core network gateway, refer to the technical solution of the foregoing embodiment. Details are not described again.

In the technical solution of the embodiment shown in FIG. 6, after the AF sends the latency jitter distribution characteristics of the service data packet to the core network gateway, the core network gateway can consider the impact of the network transmission characteristics between the AS and the core network gateway on the latency jitter distribution characteristics of the service data packet. Therefore, the adjusted latency jitter distribution characteristics can be adapted to an actual transmission process of the service data packet. This avoids deviations of a configured data transmission control policy caused by the impact of the network transmission characteristics, and improves scheduling accuracy for the transmission process of the service data packet and transmission quality of the service data packet, thereby helping improve the experience brought by services.

In the technical solution of the embodiment shown in FIG. 6, the latency jitter distribution characteristics of the service data packet are adjusted through the network transmission characteristics between the AS and the core network gateway. In other embodiments of this application, in the transmission process of the service data packet, periodic information of the service data packet may change due to the network transmission characteristics or a data packet transmission policy. In this case, after the AF sends the periodic information of the service data packet to the core network gateway, the core network gateway may alternatively adjust the periodic information of the service data packet according to the network transmission characteristics between the AS and the core network gateway, and then perform data transmission control according to adjusted periodic information.

In some embodiments of this application, the core network gateway may alternatively adjust both the periodic information and the latency jitter distribution characteristics of the service data packet according to the network transmission characteristics between the AS and the core network gateway, and then perform data transmission control according to adjusted periodic information and adjusted latency jitter distribution characteristics.

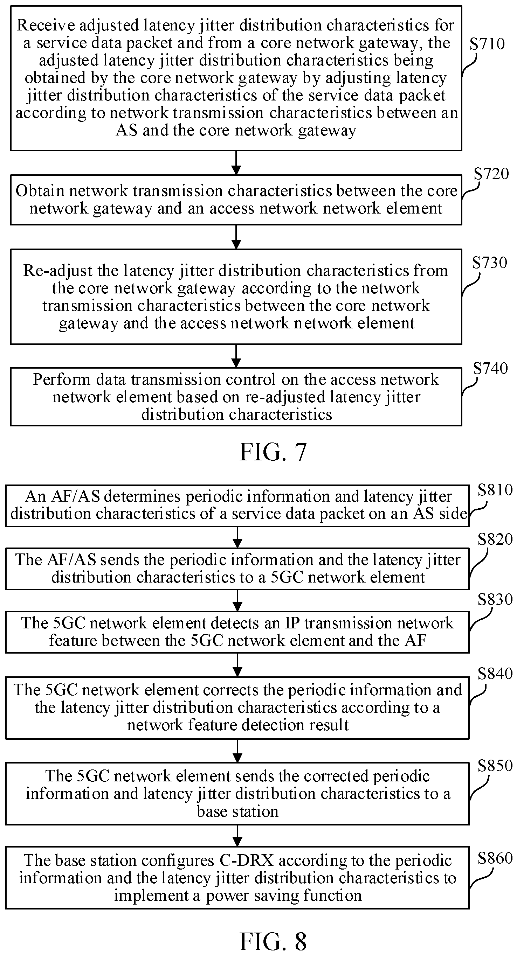

FIG. 7 is a flowchart of a data transmission control method according to some embodiments of this application. The data transmission control method may be performed by a core network's network element. The core network's network element may be a PCF or an NWDAF. Referring to FIG. 7, the data transmission control method may include S710 to S740. A detailed description is as follows:

S710: Receive adjusted latency jitter distribution characteristics for a service data packet and from a core network gateway, the adjusted latency jitter distribution characteristics being obtained by the core network gateway by adjusting latency jitter distribution characteristics of the service data packet according to network transmission characteristics between an AS and the core network gateway.

In some embodiments, a PCF may subscribe to a network analytics service from an NWDAF. The service is configured for collecting latency jitter distribution characteristics adjusted by a UPF. Then, the PCF may obtain the adjusted latency jitter distribution characteristics from the NWDAF.

In some embodiments, for the process in which the core network gateway adjusts the latency jitter distribution characteristics of the service data packet according to the network transmission characteristics between the AS and the core network gateway, refer to the technical solution of the foregoing embodiment. This may be specifically: obtaining an impact way of the network transmission characteristics on the latency jitter distribution characteristics of the service data packet, and then adjusting the latency jitter distribution characteristics of the service data packet based on the impact way. For example, values of the latency jitter distribution characteristics of the service data packet may be increased by a set value, values of the latency jitter distribution characteristics of the service data packet may be increased by a set order of magnitude, or values of the latency jitter distribution characteristics of the service data packet may be increased by a set multiplier.

S720: Obtain network transmission characteristics between the core network gateway and an access network's network element.

In some embodiments, the core network gateway is a border device of a core network and may be, for example, a UPF. The access network's network element may be a base station, and may be, for example, a gNB.

In some embodiments, the obtaining network transmission characteristics between the core network gateway and an access network's network element may be: detecting network transmission characteristics of a GTP-U tunnel between the core network gateway and the access network's network element. Certainly, alternatively, a transmission link between the core network gateway and the access network's network element may be dynamically detected, and then the network transmission characteristics between the core network gateway and the access network's network element are determined according to a dynamic detection result for the transmission link.

S730: Re-adjust the latency jitter distribution characteristics from the core network gateway according to the network transmission characteristics between the core network gateway and the access network's network element.

In some embodiments, the process of re-adjusting the latency jitter distribution characteristics from the core network gateway according to the network transmission characteristics between the core network gateway and the access network's network element in S730 may be: obtaining an impact way of the network transmission characteristics between the core network gateway and the access network's network element on the latency jitter distribution characteristics of the service data packet, and then re-adjusting the latency jitter distribution characteristics of the service data packet based on the impact way. In some embodiments, the impact way may be obtained by continuously detecting an impact status of the network transmission characteristics between the core network gateway and the access network's network element on the latency jitter distribution characteristics, and then obtaining a corresponding changing rule (that is, the impact way) through an ML algorithm.

S740: Perform data transmission control on the access network's network element based on re-adjusted latency jitter distribution characteristics.

In some embodiments, the core network's network element (for example, the PCF) may send the re-adjusted latency jitter distribution characteristics to the access network's network element (for example, a gNB). Then, the access network's network element performs C-DRX configuration, SPS scheduling, and the like again.

In the technical solution of the embodiment shown in FIG. 7, the impact of the network transmission characteristics between the core network gateway and the access network's network element on the latency jitter distribution characteristics of the service data packet can be considered. Therefore, the adjusted latency jitter distribution characteristics can be adapted to an actual transmission process of the service data packet. This avoids deviations of a configured data transmission control policy caused by the impact of the network transmission characteristics, and improves scheduling accuracy for the transmission process of the service data packet and transmission quality of the service data packet, thereby helping improve the experience brought by services.

In the technical solution of the embodiment shown in FIG. 7, the latency jitter distribution characteristics of the service data packet are adjusted through the network transmis sion characteristics between the core network gateway and the access network's network element. In other embodiments of this application, in the transmission process of the service data packet, periodic information of the service data packet may change due to the network transmission characteristics or a data packet transmission policy. In this case, the periodic information of the service data packet may alternatively be adjusted according to the network transmission characteristics between the core network gateway and the access network's network element, and then data transmission control is performed according to adjusted periodic information.

In some embodiments of this application, alternatively, both the periodic information and the latency jitter distribution characteristics of the service data packet may be adjusted according to the network transmission characteristics between the core network gateway and the access network's network element, and then the core network gateway performs data transmission control according to adjusted periodic information and adjusted latency jitter distribution characteristics.

The technical solutions of the embodiments of this application are elaborated from the perspectives of the core network gateway, the AF, and the core network's network element, respectively. The implementation details of the technical solutions of the embodiments of this application are further described below from the perspective of interaction between a plurality of device entities:

The technical solutions of the embodiments of this application are mainly that the UPF can proactively detect an IP transmission network feature between the AF/AS and the UPF, and analyze the impact of the transmission network feature on periodic information and latency jitter distribution characteristics. In this way, after the periodic information and the latency jitter distribution characteristics provided by the AF/AS are received, with reference to the IP transmission network feature between the AF/AS and the UPF, the periodic information and the latency jitter distribution characteristics of a service data packet can be adjusted and then configured for a base station. Then, the base station may perform XR data packet processing according to adjusted periodic information and latency jitter distribution characteristics, including but not limited to, C-DRX configuration and SPS scheduling for a RAN.

The service data packet in the embodiments of this application may be an XR service data packet, or may be other multimedia service data packets, such as data packets of a cloud gaming service, or data packets of services such as VR, AR, MR, and CR. In other words, the technical solutions of the embodiments of this application may be applied to processing of an XR service data packet, or may be applied to processing of data packets of a cloud gaming service and services such as VR, AR, MR, and CR.

Specifically, as shown in FIG. 8, a data transmission control method according to some embodiments of this application includes the following operations:

S810: An AF/AS determines periodic information and latency jitter distribution characteristics of a service data packet on an AS side.

In some embodiments, the AF/AS may determine the periodic information of the service data packet according to a codec method of the service data packet and transmission parameters of a multimedia stream. In some embodiments, the codec method of the service data packet includes, but is not limited to, AVC, HEVC, VVC, and the like. The transmission parameters of the multimedia stream may include content of service data, including, but not limited to, audio, a video, haptic information, and the like.

In some embodiments, whether the service data packet has periodic information is also related to push and pull parameters on the AS side, for example, whether the AS pushes the multimedia data stream at a fixed frame rate or a variable frame rate when a network bandwidth changes.

In some embodiments, the latency jitter distribution characteristics may be represented, for example, as a jitter range. The jitter range may be a latency jitter distribution interval inducing a maximum latency jitter value (that is, a maximum jitter value) and a minimum latency jitter value (that is, a minimum jitter value).

For example, the jitter range is [-4, 4], indicating that with an average latency 0 as a reference, -4 is the minimum latency jitter value, and 4 is the maximum latency jitter value. In this case, if the average latency is 20 ms, an actual latency is distributed in a range of [16 ms, 24 ms].

In some embodiments, the maximum latency jitter value and the minimum latency jitter value may be obtained by the AS through statistics collection of network transmission of a multimedia data stream, that is, obtained from an interface between the AS and an IP transmission network.

S820: The AF/AS sends the periodic information and the latency jitter distribution characteristics to a 5GC network element. In some embodiments, the 5GC network element may be a UPF.

S830: The 5GC network element detects an IP transmission network feature between the 5GC network element and the AF.

In this embodiment of this application, a quality of service (QoS) base station in a 5GS may be supported through a GTP-u tunnel and a radio bearer, and a link between the AF and the 5GS usually cannot be ensured by using a 5G QoS mechanism defined by 3GPP. Therefore, on this link, bandwidth and latency changes may be obtained through dynamic link detection between the 5GS and the AF, and then the IP transmission network feature is obtained.

If there is an SLA for the link between the AF/AS and the 5GS, the UPF may detect whether the SLA is satisfied, and may refer to the SLA to infer periodicity and a jitter distribution range sent by the AF/AS to the 5GS. In addition, a case that a real-time transmission indicator is better than the SLA, which causes the periodicity and jitter distribution feature to change needs to be considered.

S840: The 5GC network element corrects the periodic information and the latency jitter distribution characteristics according to a network feature detection result.

In some embodiments, that the 5GC network element, such as a UPF, corrects the periodic information and the latency jitter distribution characteristics according to a network feature detection result may be: obtaining an impact way of network transmission characteristics on the latency jitter distribution characteristics of the service data packet according to the network feature detection result, and then adjusting the periodic information and the latency jitter distribution characteristics of the service data packet based on the impact way. In some embodiments, the impact way may be obtained by continuously detecting an impact status of the network transmission characteristics between the AS and a 5GC gateway on the latency jitter distribution characteristics, and then obtaining a corresponding changing rule (that is, the impact way) through an ML algorithm.

S850: The 5GC network element sends the corrected periodic information and latency jitter distribution characteristics to a base station.

If the 5GC network element is a UPF, the UPF may configure the corrected periodic information and latency jitter distribution characteristics for the base station through a core network a network element. For example, the UPF may configure the corrected periodic information and latency jitter distribution characteristics for the base station through an SMF. Alternatively, a PCF may subscribe to a network analytics service from an NWDAF. The service is configured for collecting the periodic information and latency jitter distribution characteristics corrected by the UPF. Then, the PCF may obtain the corrected periodic information and latency jitter distribution characteristics from the NWDAF. Subsequently, the PCF configures the corrected periodic information and latency jitter distribution characteristics for the base station through an SMF and/or an AMF.

In some embodiments, after receiving the corrected periodic information and latency jitter distribution characteristics, the 5GS may further correct the latency jitter distribution characteristics according to link characteristics between the UPF and the gNB. For example, the NWDAF or the PCF may obtain an impact way of network transmission characteristics between the UPF and the gNB on the latency jitter distribution characteristics of the service data packet, and then re-adjust the latency jitter distribution characteristics of the service data packet based on the impact way. In some embodiments, the impact way may be obtained by continuously detecting an impact status of the network transmission characteristics between the UPF and the gNB on the latency jitter distribution characteristics, and then obtaining a corresponding changing rule (that is, the impact way) through an ML algorithm.

S860: The base station configures C-DRX according to the periodic information and the latency jitter distribution characteristics to implement a power saving function.

C-DRX in the embodiments of this application is a connected-discontinuous reception mode. This can cause UE to periodically enter a sleep state and not detect a physical downlink control channel (PDCCH), and when detection is required, the UE wakes up from the sleep state, thereby achieving power saving.

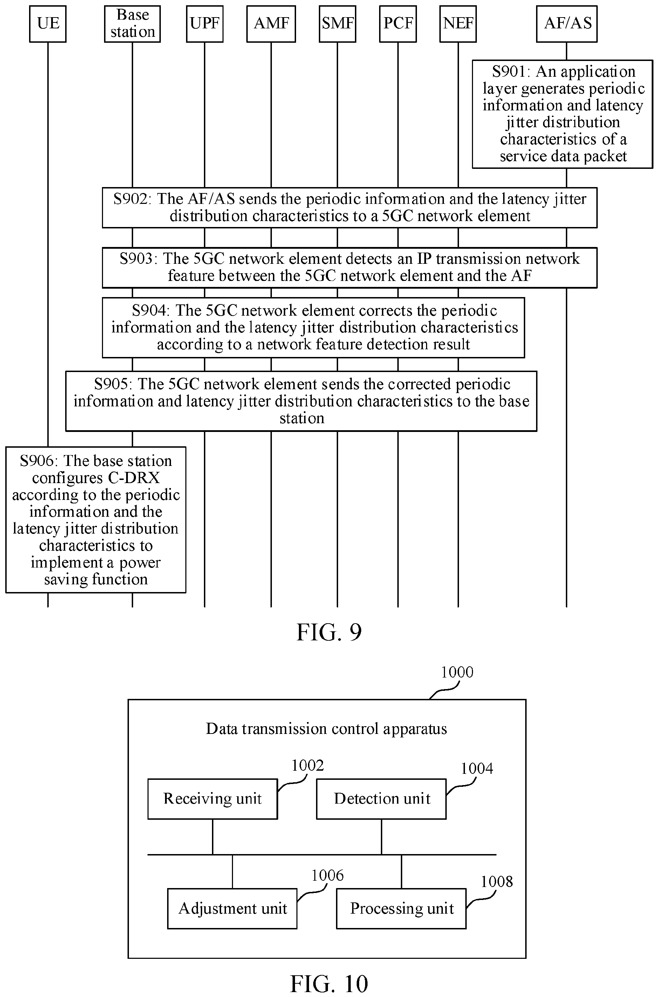

A specific interaction procedure of the method shown in FIG. 8 is shown in FIG. 9 and includes the following operations:

S901: An application layer generates periodic information and latency jitter distribution characteristics of a service data packet.

In some embodiments, an AF/AS may determine the periodic information of the service data packet according to a codec method of the service data packet and transmission parameters of a multimedia stream. In some embodiments, the codec method of the service data packet includes, but is not limited to, AVC, HEVC, VVC, and the like. The transmission parameters of the multimedia stream may include content of service data, including, but not limited to, audio, a video, haptic information, and the like.

In some embodiments, whether the service data packet has periodic information is also related to push and pull parameters on the AS side, for example, whether the AS pushes the multimedia data stream at a fixed frame rate or a variable frame rate when a network bandwidth changes.

In some embodiments, the latency jitter distribution characteristics may be represented, for example, as a jitter range. The jitter range may be a latency jitter distribution interval inducing a maximum latency jitter value (that is, a maximum jitter value) and a minimum latency jitter value (that is, a minimum jitter value). In some embodiments, the maximum latency jitter value and the minimum latency jitter value may be obtained by the AS through statistics collection of network transmission of a multimedia data stream, that is, obtained from an interface between the AS and an IP transmission network.

S902: The AF/AS sends the periodic information and the latency jitter distribution characteristics to a 5GC network element. In some embodiments, the 5GC network element may be a UPF.

S903: The 5GC network element (such as the UPF) detects an IP transmission network feature between the 5GC network element and the AF.

In this embodiment of this application, a QoS base station in a 5GS may be supported through a GTP-u tunnel and a radio bearer, and a link between the AF and the 5GS usually cannot be ensured by using a 5G QoS mechanism defined by 3GPP. Therefore, on this link, bandwidth and latency changes may be obtained through dynamic link detection between the 5GS and the AF, and then the IP transmission network feature is obtained.

S904: The 5GC network element corrects the periodic information and the latency jitter distribution characteristics according to a network feature detection result.

In some embodiments, that the 5GC network element corrects the periodic information and the latency jitter distribution characteristics according to a network feature detection result may be: obtaining an impact way of network transmission characteristics on the latency jitter distribution characteristics of the service data packet according to the network feature detection result, and then adjusting the periodic information and the latency jitter distribution characteristics of the service data packet based on the impact way. In some embodiments, the impact way may be obtained by continuously detecting an impact status of the network transmission characteristics between the AS and a 5GC gateway on the latency jitter distribution characteristics, and then obtaining a corresponding changing rule through an ML algorithm.

S905: The 5GC network element sends the corrected periodic information and latency jitter distribution characteristics to the base station.

In some embodiments, after receiving the corrected periodic information and latency jitter distribution characteristics, the 5GS may further correct the latency jitter distribution characteristics according to link characteristics between the UPF and the gNB.

S906: The base station configures C-DRX according to the periodic information and the latency jitter distribution characteristics to implement a power saving function.

In the embodiments shown in FIG. 8 and FIG. 9, the technical solutions of the embodiments of this application are described by using an example in which the 5GC network element, such as the UPF, corrects the periodic information and the latency jitter distribution characteristics according to the network feature detection result. In other embodiments of this application, alternatively, the UPF may correct the latency jitter distribution characteristics according to the network feature detection result, send the periodic information to the gNB as known information, and correct the periodic information when needed. For example, when greatly affected by a network affect, the periodic information of the service data packet is corrected.

In the technical solutions of the foregoing embodiments of this application, the impact of the network transmission characteristics between the AS and the core network gateway on the latency jitter distribution characteristics of the service data packet can be considered. Therefore, the adjusted latency jitter distribution characteristics can be adapted to an actual transmission process of the service data packet. This avoids deviations of a configured data transmission control policy caused by the impact of the network transmission characteristics, and improves scheduling accuracy for the transmission process of the service data packet and transmission quality of the service data packet, thereby helping improve the experience brought by services.

The apparatus embodiments of this application are described below and may be configured for performing the data transmission control method in the foregoing embodiment of this application. For details not disclosed in the apparatus embodiments of this application, refer to the embodiments of the foregoing data transmission control method in this application.

FIG. 10 is a block diagram of a data transmission control apparatus according to some embodiments of this application. The data transmission control apparatus may be disposed in a core network's network element. The core network's network element may be a UPF.

Referring to FIG. 10, the data transmission control apparatus 1000 according to some embodiments of this application includes: a receiving unit 1002, a detection unit 1004, an adjustment unit 1006, and a processing unit 1008.

The receiving unit 1002 is configured to receive latency jitter distribution characteristics of a service data packet that are transmitted by an AF, the latency jitter distribution characteristics being configured for representing a transmission latency range of the service data packet. The detection unit 1004 is configured to detect network transmission characteristics between an AS and a core network gateway. The adjustment unit 1006 is configured to adjust the latency jitter distribution characteristics of the service data packet according to the network transmission characteristics to obtain adjusted latency jitter distribution characteristics. The processing unit 1008 is configured to perform data transmission control according to the adjusted latency jitter distribution characteristics.

In some embodiments of this application, based on the foregoing solution, the network transmission characteristics include transmission bandwidth and latency changes of a transmission link between the AS and the core network gateway. The detection unit 1004 is configured to: dynamically detect the transmission link between the application server and the core network gateway; and determine the transmission bandwidth and latency changes of the transmission link according to a dynamic detection result for the transmission link.

In some embodiments of this application, based on the foregoing solution, the detection unit 1004 is configured to: when there is an SLA for a transmission link between the AS and a core network, determine the network transmission characteristics between the AS and the core network gateway according to the SLA between the AS and the core network.

In some embodiments of this application, based on the foregoing solution, the detection unit 1004 is configured to: evaluate, according to the SLA between the AS and the core network, whether the SLA has an impact on the latency jitter distribution characteristics of the service data packet; and if the SLA has an impact on the latency jitter distribution characteristics of the service data packet, determine the network transmission characteristics between the AS and the core network gateway according to the SLA between the AS and the core network; or if the SLA has no impact on the latency jitter distribution characteristics of the service data packet, dynamically detect the transmission link between the AS and the core network gateway, and determine the network transmission characteristics between the AS and the core network gateway according to a dynamic detection result for the transmission link.

In some embodiments of this application, based on the foregoing solution, the detection unit 1004 is configured to: dynamically detect a transmission link between the AS and the core network gateway according to an SLA between the AS and a core network to obtain transmission bandwidth and latency changes of the transmission link.

In some embodiments of this application, based on the foregoing solution, the adjustment unit 1006 is configured to: obtain an impact way of the network transmission characteristics on the latency jitter distribution characteristics of the service data packet; and adjust the latency jitter distribution characteristics of the service data packet based on the impact way.

In some embodiments of this application, based on the foregoing solution, that the adjustment unit 1006 adjusts the latency jitter distribution characteristics of the service data packet includes at least one of the following: increasing values of the latency jitter distribution characteristics of the service data packet by a set value, increasing values of the latency jitter distribution characteristics of the service data packet by a set order of magnitude, or increasing values of the latency jitter distribution characteristics of the service data packet by a set multiplier.

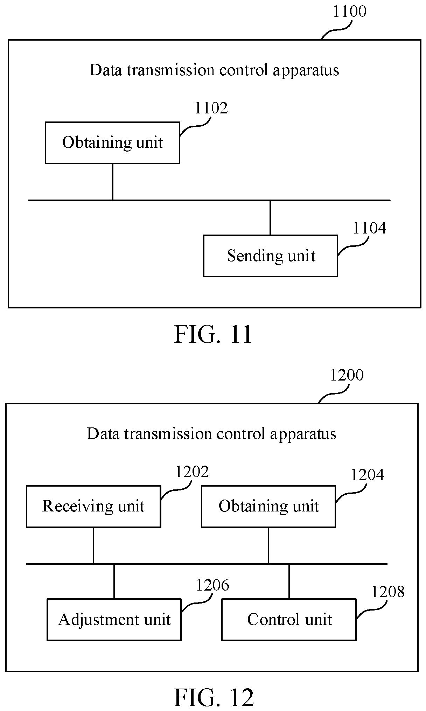

FIG. 11 is a block diagram of a data transmission control apparatus according to some embodiments of this application. The data transmission control apparatus may be disposed in an AF.

Referring to FIG. 11, the data transmission control apparatus 1100 according to some embodiments of this application includes: an obtaining unit 1102 and a sending unit 1104.

The obtaining unit 1102 is configured to obtain latency jitter distribution characteristics of a service data packet, the latency jitter distribution characteristics being configured for representing a transmission latency range of the service data packet. The sending unit 1104 is configured to transmit the latency jitter distribution characteristics to a core network gateway, so that the core network gateway adjusts the latency jitter distribution characteristics of the service data packet according to network transmission characteristics between an AS and the core network gateway and performs data transmission control according to adjusted latency jitter distribution characteristics.

In some embodiments of this application, based on the foregoing solution, the service data packet is a periodic service data packet. The data transmission control apparatus 1100 further includes: a determining unit, configured to determine periodic information of the periodic service data packet according to at least one of the following factors: a codec method for the service data packet, transmission parameters of a multimedia service stream corresponding to the service data packet, push parameters of the AS for the multimedia service stream, and pull parameters of the AS for the multimedia service stream.

In some embodiments of this application, based on the foregoing solution, the latency jitter distribution characteristics include a maximum latency jitter value and a minimum latency jitter value. The obtaining unit 1102 is configured to: obtain a network transmission status of the service data packet obtained through statistics collection by the AS; and determine the maximum latency jitter value and the minimum latency jitter value according to the network transmission status of the service data packet.

FIG. 12 is a block diagram of a data transmission control apparatus according to some embodiments of this application. The data transmission control apparatus may be disposed in a core network's network element. The core network's network element may be an NWDAF, a PCF, or the like.

Referring to FIG. 12, the data transmission control apparatus 1200 according to some embodiments of this application includes: a receiving unit 1202, an obtaining unit 1204, an adjustment unit 1206, and a control unit 1208.

The receiving unit 1202 is configured to receive adjusted latency jitter distribution characteristics for a service data packet and from a core network gateway, the adjusted latency jitter distribution characteristics being obtained by the core network gateway by adjusting latency jitter distribution characteristics of the service data packet according to network transmission characteristics between an AS and the core network gateway. The obtaining unit 1204 is configured to obtain network transmission characteristics between the core network gateway and an access network's network element. The adjustment unit 1206 is configured to re-adjust the latency jitter distribution characteristics from the core network gateway according to the network transmission characteristics between the core network gateway and the access network's network element. The control unit 1208 is configured to perform data transmission control on the access network's network element based on re-adjusted latency jitter distribution characteristics.

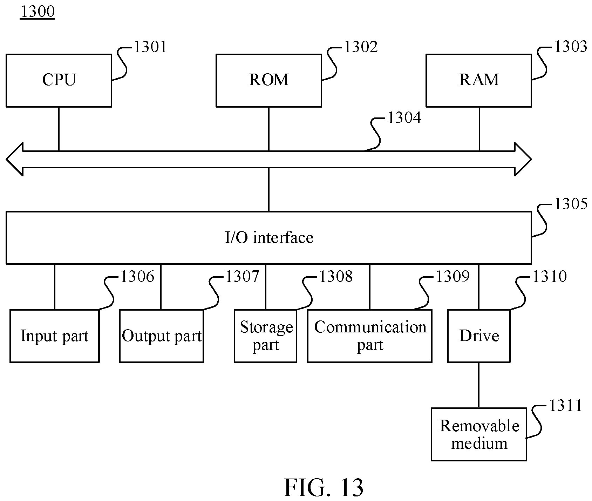

FIG. 13 is a schematic structural diagram of a computer system adapted to implement an electronic device according to an embodiment of this application.

The computer system 1300 of the electronic device shown in FIG. 13 is merely an example and is not to constitute any limitation on functions and use scopes of the embodiments of this application.

As shown in FIG. 13, the computer system 1300 includes a central processing unit (CPU) 1301, which may perform various suitable actions and processing based on a program stored in a read-only memory (ROM) 1302 or a program loaded from a storage part 1308 into a random access memory (RAM) 1303, for example, perform the method described in the foregoing embodiments. The RAM 1303 further stores various programs and data required for system operations. The CPU 1301, the ROM 1302, and the RAM 1303 are connected to one another through a bus 1304. An input/output (I/O) interface 1305 is also connected to the bus 1304.

The following components are connected to the I/O interface 1305: an input part 1306 including a keyboard, a mouse, or the like; an output part 1307 including a cathode ray tube (CRT), a liquid crystal display (LCD), a speaker, or the like; the storage part 1308 including a hard disk, or the like; and a communication part 1309 including a network interface card such as a local area network (LAN) card or a modem. The communication part 1309 performs communication processing through a network such as the Internet. A drive 1310 is also connected to the I/O interface 1305 as needed. A removable medium 1311, such as a magnetic disk, an optical disk, a magneto-optical disk, or a semiconductor memory, is mounted on the drive 1310 as required, so that a computer program read therefrom is installed into the storage part 1308 as required.

Particularly, according to an embodiment of this application, the processes described in the following by referring to the flowcharts may be implemented as computer software programs. For example, an embodiment of this application includes a computer program product. The computer program product includes a computer program stored in a computer-readable medium. The computer program includes a computer program used for performing a method shown in the flowchart. In such an embodiment, the computer program may be downloaded and installed from a network through the communication part 1309, and/or installed from the removable medium 1311. When the computer program is executed by the CPU 1301, the various functions defined in the system of this application are performed.

The computer-readable medium shown in the embodiments of this application may be a computer-readable signal medium or a computer-readable storage medium or any combination thereof. The computer-readable storage medium may be, for example, but is not limited to, an electric, magnetic, optical, electromagnetic, infrared, or semi-conductive system, apparatus, or component, or any combination thereof. A more specific example of the computer-readable storage medium may include, but is not limited to: an electrical connection having one or more wires, a portable computer magnetic disk, a hard disk, a RAM, a ROM, an erasable programmable read-only memory (EPROM), a flash memory, an optical fiber, a compact disc read-only memory (CD-ROM), an optical storage device, a magnetic storage device, or any appropriate combination thereof. In this application, the computer-readable storage medium may be any tangible medium containing or storing a program, and the program may be used by or used in combination with an instruction execution system, apparatus, or device. In this application, the computer-readable signal medium may include a data signal propagated in a baseband or as part of a carrier, having a computer-readable computer program carried therein. A data signal propagated in such a way may be in a plurality of forms, including, but not limited to, an electromagnetic signal, an optical signal, or any appropriate combination thereof. The computer-readable signal medium may be further any computer-readable medium in addition to a computer-readable storage medium. The computer-readable medium may send, propagate, or transmit a program that is used by or used in conjunction with an instruction execution system, apparatus, or device. The computer program contained on the computer-readable medium may be transmitted using any suitable medium, including but not limited to: a wireless medium, a wired medium, or the like, or any appropriate combination thereof.

The flowcharts and block diagrams in the accompanying drawings illustrate system architectures, functions, and operations that may be implemented by a system, a method, and a computer program product according to the embodiments of this application. Each block in a flowchart or a block diagram may represent a module, a program segment, or a part of code. The module, program segment, or part of code contains one or more executable instructions configured for implementing defined logical functions. In some alternative implementations, the functions marked in the blocks may alternatively occur in a different order from that marked in the accompanying drawings. For example, two successively shown blocks actually may be executed in parallel substantially, or may be executed in reverse order sometimes, depending on the functions involved. Additionally, each block in the block diagram and/or flowchart and a combination of blocks in the block diagram and/or the flowchart may be implemented by using a dedicated hardware-based system configured to perform a defined function or operation, or may be implemented by using a combination of dedicated hardware and a computer program.

Units involved and described in the embodiments of this application may be implemented in the form of software or in the form of hardware. The described units may also be disposed in the processor. Names of the units do not constitute a limitation on the units in a specific case.

According to another aspect, this application further provides a computer-readable medium. The computer-readable medium may be included in the electronic device described in the foregoing embodiments, or may exist alone and is not disposed in the electronic device. The computer-readable medium carries one or more programs, the one or more programs, when executed by the electronic device, causing the electronic device to implement the method described in the foregoing embodiments.

Although a plurality of modules or units of a device configured to perform actions are discussed in the foregoing detailed description, such division is not mandatory. Actually, according to the implementations of this application, the features and functions of two or more modules or units described above may be embodied in one module or unit. On the contrary, the features and functions of one module or unit described above may be further divided to be embodied by a plurality of modules or units.

According to the foregoing descriptions of the implementations, a person skilled in the art may readily understand that the examples of the implementations described herein may be implemented by software, or by software in combination with necessary hardware. Therefore, the technical solutions of the embodiments of this application may be implemented in a form of a software product. The software product may be stored in a non-volatile storage medium (which may be a CD-ROM, a USB flash drive, a removable hard disk, or the like) or on the network, including a plurality of instructions for instructing a computing device (which may be a personal computer, a server, a touch terminal, a network device, or the like) to perform the methods according to the implementations of this application.

After considering this specification and practicing the implementations disclosed herein, a person skilled in the art may easily conceive of other implementations of this application. This application is intended to cover any variations, uses, or adaptive changes of this application. These variations, uses, or adaptive changes follow the general principles of this application and include common general knowledge or common technical means in the art, which are not disclosed in this application.

This application is not limited to the precise structures described above and shown in the accompanying drawings, and various modifications and changes can be made without departing from the scope of this application. The scope of this application is subject only to the appended claims.

## Claims

1. A data transmission control method, performed by a core network gateway, the method comprising:
receiving latency jitter distribution characteristics of a service data packet that are transmitted by an application function (AF), the latency jitter distribution characteristics representing a transmission latency range of the service data packet;
detecting network transmission characteristics between an application server (AS) and the core network gateway;
adjusting the latency jitter distribution characteristics of the service data packet according to the network transmission characteristics to obtain adjusted latency jitter distribution characteristics; and
performing data transmission control according to the adjusted latency jitter distribution characteristics.

2. The method according to claim 1, wherein the network transmission characteristics comprise transmission bandwidth and latency changes of a transmission link between the AS and the core network gateway; and the detecting network transmission characteristics between the AS and the core network gateway comprises:
dynamically detecting the transmission link between the application server and the core network gateway; and
determining the transmission bandwidth and latency changes of the transmission link according to a dynamic detection result for the transmission link.

3. The method according to claim 1, wherein the detecting network transmission characteristics between the AS and the core network gateway comprises:
when there is a service level agreement (SLA) for a transmission link between the AS and a core network, determining the network transmission characteristics between the AS and the core network gateway according to the SLA between the AS and the core network.

4. The method according to claim 3, wherein the determining the network transmission characteristics between the AS and the core network gateway according to the SLA between the AS and the core network comprises:
evaluating, according to the SLA between the AS and the core network, whether the SLA has an impact on the latency jitter distribution characteristics of the service data packet; and
if the SLA has an impact on the latency jitter distribution characteristics of the service data packet, determining the network transmission characteristics between the AS and the core network gateway according to the SLA between the AS and the core network; or
if the SLA has no impact on the latency jitter distribution characteristics of the service data packet, dynamically detecting the transmission link between the AS and the core network gateway, and determining the network transmission characteristics between the AS and the core network gateway according to a dynamic detection result for the transmission link.

5. The method according to claim 1, wherein the detecting network transmission characteristics between the AS and the core network gateway comprises:
dynamically detecting a transmission link between the AS and the core network gateway according to a service level agreement (SLA) between the AS and a core network to obtain transmission bandwidth and latency changes of the transmission link.

6. The method according to claim 1, wherein the adjusting the latency jitter distribution characteristics of the service data packet according to the network transmission characteristics comprises:
obtaining an impact way of the network transmission characteristics on the latency jitter distribution characteristics of the service data packet; and
adjusting the latency jitter distribution characteristics of the service data packet based on the impact way.

7. The method according to claim 6, wherein the adjusting the latency jitter distribution characteristics of the service data packet based on the impact way comprises at least one of the following:
increasing values of the latency jitter distribution characteristics of the service data packet by a set value, increasing values of the latency jitter distribution characteristics of the service data packet by a set order of magnitude, or increasing values of the latency jitter distribution characteristics of the service data packet by a set multiplier.

8. A data transmission control method, performed by an application function, and comprising:
obtaining latency jitter distribution characteristics of a service data packet, the latency jitter distribution characteristics representing a transmission latency range of the service data packet; and
transmitting the latency jitter distribution characteristics to a core network gateway, so that the core network gateway adjusts the latency jitter distribution characteristics of the service data packet according to network transmission characteristics between an application server (AS) and the core network gateway and performs data transmission control based on adjusted latency jitter distribution characteristics.

9. The method according to claim 8, wherein the service data packet is a periodic service data packet; and
the method further comprises: determining periodic information of the periodic service data packet according to at least one of the following factors: a codec method for the service data packet, transmission parameters of a multimedia service stream corresponding to the service data packet, push parameters of the AS for the multimedia service stream, and pull parameters of the AS for the multimedia service stream.

10. The method according to claim 8, wherein the latency jitter distribution characteristics comprise a maximum latency jitter value and a minimum latency jitter value; and the method further comprises:
obtaining a network transmission status of the service data packet obtained through statistics collection by the AS; and
determining the maximum latency jitter value and the minimum latency jitter value according to the network transmission status of the service data packet.

11. A data transmission control method, performed by a core network's network element, and comprising:
receiving adjusted latency jitter distribution characteristics for a service data packet and from a core network gateway, the adjusted latency jitter distribution characteristics being obtained by the core network gateway by adjusting latency jitter distribution characteristics of the service data packet according to network transmission characteristics between an application server (AS) and the core network gateway;
obtaining network transmission characteristics between the core network gateway and an access network's network element; and
re-adjusting the latency jitter distribution characteristics from the core network gateway according to the network transmission characteristics between the core network gateway and the access network's network element; and
performing data transmission control on the access network's network element based on re-adjusted latency jitter distribution characteristics.

12. A data transmission control apparatus, comprising:
a receiving unit, configured to receive latency jitter distribution characteristics of a service data packet that are transmitted by an application function (AF), the latency jitter distribution characteristics representing a transmission latency range of the service data packet;
a detection unit, configured to detect network transmission characteristics between an application server (AS) and a core network gateway;
an adjustment unit, configured to adjust the latency jitter distribution characteristics of the service data packet according to the network transmission characteristics to obtain adjusted latency jitter distribution characteristics; and
a processing unit, configured to perform data transmission control according to the adjusted latency jitter distribution characteristics.

13. A data transmission control apparatus, comprising:
an obtaining unit, configured to obtain latency jitter distribution characteristics of a service data packet, the latency jitter distribution characteristics representing a transmission latency range of the service data packet; and
a sending unit, configured to transmit the latency jitter distribution characteristics to a core network gateway, so that the core network gateway adjusts the latency jitter distribution characteristics of the service data packet according to network transmission characteristics between an application server (AS) and the core network gateway and performs data transmission control according to adjusted latency jitter distribution characteristics.

14. A data transmission control apparatus, comprising:
a receiving unit, configured to receive adjusted latency jitter distribution characteristics for a service data packet and from a core network gateway, the adjusted latency jitter distribution characteristics being obtained by the core network gateway by adjusting latency jitter distribution characteristics of the service data packet according to network transmission characteristics between an application server (AS) and the core network gateway;
an obtaining unit, configured to obtain network transmission characteristics between the core network gateway and an access network's network element;
an adjustment unit, configured to re-adjust the latency jitter distribution characteristics from the core network gateway according to the network transmission characteristics between the core network gateway and the access network's network element; and
a control unit, configured to perform data transmission control on the access network's network element based on re-adjusted latency jitter distribution characteristics.

15. A computer-readable medium, having a computer program stored therein, the computer program, when executed by a processor, implementing the data transmission control method according to any one of claims 1 to 11.

16. An electronic device, comprising:
one or more processors; and
a memory, configured to store one or more computer programs, the one or more computer programs, when executed by the one or more processors, causing the electronic device to implement the data transmission control method according to any one of claims 1 to 11.

17. A computer program product, comprising a computer program, the computer program being stored in a computer-readable storage medium, and a processor of an electronic device reading, from the computer-readable storage medium, and executing the computer program, to cause the electronic device to perform the data transmission control method according to any one of claims 1 to 11.
